(19) Europäisches Patentamt

European Patent Office

Office européen des brevets

(11) Veröffentlichungsnummer: **0 674 839 A1**

(12) **EUROPÄISCHE PATENTANMELDUNG**

(21) Anmeldenummer: **95104430.4**

(22) Anmeldetag: **25.03.95**

(51) Int. Cl.⁶: **A23F 5/46**, A23F 5/14

(30) Priorität: **31.03.94 DE 4411204**

(43) Veröffentlichungstag der Anmeldung:
**04.10.95 Patentblatt 95/40**

(84) Benannte Vertragsstaaten:
**AT BE CH DE DK ES FR GB GR IE IT LI LU MC
NL PT SE**

(71) Anmelder: **KRÜGER GmbH & CO. KG
Senefelder Strasse 44
D-51469 Bergisch-Gladbach (DE)**

(72) Erfinder: **Krüger, Willibert
Zaunkönigweg 5
D-51467 Bergisch Gladbach (DE)**

(74) Vertreter: **Eggert, Hans-Gunther, Dr.
Räderscheidtstrasse 1
D-50935 Köln (DE)**

(54) **Aromatisierter Röstkaffee und seine Herstellung.**

㊼ Die Erfindung betrifft einen Röstkaffee, der eine zusätzliche aromawirksame Substanz enthält, wobei der Röstkaffee in Form ganzer gerösteter Bohnen, als Bohnenbruch oder gemahlen vorliegt.

EP 0 674 839 A1

EP 0 674 839 A1

Es ist bekannt, löslichen Kaffee-Extrakt zu agglomerieren und hierbei Aromen aller Art wie auch Gewürze und Pflanzenextrakte hinzuzufügen.

Der vorliegenden Erfindung liegt die Aufgabe zugrunde, einen aromatisierten Röstkaffee bereitzustellen.

Gegenstand der Erfindung ist ein Röstkaffee, der zusätzlich eine aromawirksame Substanz enthält. Der Röstkaffee kann in Form ganzer gerösteter Bohnen, als Bohnenbruch oder gemahlen vorliegen. Gemahlener Röstkaffee wird für die Zwecke der Erfindung bevorzugt. Der erfindungsgemäße aromatisierte Röstkaffee sollte möglichst eine gewisse Restfeuchte haben, weil sie die Entfaltung des Aromas auch schon vor dem Aufbrühen fordert. Diese Restfeuchte kann 0,1 bis 5 Gew.% betragen und sollte möglichst nahe an dem für Röstkaffee zulässigem Feuchtigkeitsgehalt von maximal 5 Gew.% liegen.

Die erfindungsgemäße aromatisierte Röstkaffeemischung hat den Vorteil, daß bei ihrer Herstellung die kaffee-eigenen und teilweise leichtflüchtigen Aromen nahezu vollständig erhalten bleiben. Dies bedingt weiterhin, daß die aromatisierte Röstkaffeemischung im Gegensatz zu einem Löskaffee einen natürlicheren Kaffeegeschmack aufweist. Der erfindungsgemäße aromatisierte Röstkaffee hat schließlich den Vorteil der einfachen Zubereitung, d.h. es müssen keine Geschmacksstoffe mehr zugesetzt werden; es ist nur ein Arbeitsgang erforderlich (Convenience-Product).

Bei dem Röstkaffee handelt es sich vorzugsweise um die Rohkaffeeprovenienzen Arabica aus den Produzentenländern Kenia, Tansania, Costa Rica, Guatemala, Honduras, Nicaragua, Mexico, Ecuador, Brasilien, Columbien, Neuguinea, Uganda und Äthiopien, wobei diese Provenienzen (in der Regel 3 bis 7 vorstehender Provenienzen) entweder vor oder nach dem Rösten gemischt werden. Nach der Röstung wird im allgemeinen der üblicherweise 1 % Restfeuchte aufweisende Röstkaffee von ca. 200 °C bis auf maximal 5 % Restfeuchte angefeuchtet, die Bohnen als solche eingesetzt oder unter Inertgas vermahlen.

Im Rahmen der Erfindung wird unter Röstkaffee ein Röstkaffee mit einem Restfeuchtegehalt von 0,1 bis 5,0 Gew.%, vorzugsweise 0,3 bis 5,0 Gew.% verstanden.

Die Korngröße der Röstkaffeemahlung liegt im allgemeinen zwischen 50 und 2000 $\mu$m, vorzugsweise zwischen 500 und 1500 $\mu$m oder 60 bis 100 $\mu$m.

Nach der vorliegenden Erfindung enthält die aromatisierte Röstkaffeemischung wenigstens eine aromawirksame Substanz, also einen Stoff, der geschmackswirksam und darüber hinaus gegebenenfalls auch geruchswirksam ist. Hierbei kann es sich um einen Süßstoff oder eine natürliche süßschmeckende Verbindung, eine Droge, ein Gewürz, einen Pflanzenextrakt, eine Milchpulverzubereitung, ein Fruchtpulver, ein Kakaopulver oder einen natürlichen, naturidentischen oder synthetischen Aromastoff handeln. Als natürliche süßschmeckende Verbindungen kommen beispielsweise Saccharose, Glucose, Fructose, Maltose, Glucose-Sirup sowie halbsynthetische und synthetische Verbindungen wie beispielsweise Saccharin, Cyclamate, Glycyrrhizin, Xylitol, L-Aspartyl-L-phenylalaninmethylester, Dihydrochalkone, Thaumatin, Monnellin und Miraculin in Betracht.

Bevorzugt werden Saccharose, Aromen, Fruchtpulver, Kakaopulver und Milchpulverzubereitungen zugesetzt.

Erfindungsgemäß können als Drogen beispielsweise Balsame, Gummiarten und Harze eingesetzt werden, vorzugsweise Ingwer, Wacholderbeeren, Ginseng, insbesondere Ingwer.

Als Gewürz werden beispielsweise Salz, Zimt, Curry, Basilikum, Vanille, Nelke, Muskat, Kardamon, vorzugsweise Salz, Vanille, Curry oder Zimt eingesetzt.

Als Pflanzenextrakt können erfindungsgemäß beispielsweise Melisse, Baldrian, Passiflora, Thymiankraut, Kamille und Pfefferminz eingesetzt werden, insbesondere Pfefferminz, Kamille. Erfindungsgemäß wird als aromawirksamer Stoff weiterhin eine Milchpulverzubereitung eingesetzt.

Der Aromastoff kann beispielsweise in Form eines etherischen Öls oder einer Riechstoffverbindung, der gleichzeitig Geschmacksstoff ist, oder in Form eines wäßrigen Extrakts oder Homogenats vorliegen. Als etherisches Öl kommen synthetische und natürliche blausäurefreie Bittermandelöle, Agrumenöle, vorzugsweise Minzöle, Mandelöle, Orangenöle, Arusöle in Betracht. Bevorzugte etherische Öle sind Mandelöle. Als Riechstoffverbindung ist beispielsweise Vanillin, Ethylvanillin, Ethylmaltol, Maltol, Zimtaldehyd, Eugenol, Anethol, $\alpha$-Carvon, 3-cis-Hexenol zu nennen, vorzugsweise wird erfindungsgemäß Vanillin eingesetzt.

Die Menge der aromatischen Substanz liegt oberhalb der sensorischen Schwelle und beträgt für etherische Öle, Gewürze und Drogen etwa 0,02 bis 2 Gewichtsteile, insbesondere 0,1 bis 0,2 Gewichtsteile, bezogen auf 100 Gewichtsteile Röstkaffee. Bei Zusatz von Kakaopulver, Fruchtpulver, Pflanzenextrakten oder Milchpulverzubereitungen kann die Menge der aromatisierenden Substanz auch bis zum Doppelten des Gewichts des Röstkaffees betragen.

Als Hilfsmittel zur besseren Fixierung der Aromen können Hydrokolloide zugesetzt werden. Dieses Hydrokolloid kann entweder natürlichen Ursprungs sein, auf natürlichen Rohstoffen basieren, die chemisch modifiziert worden sind oder ein synthetisches Hydrokolloid sein, welches als Zusatzstoff in Lebensmitteln zugelassen ist oder auf einer Mischung dieser Bestandteile.

2

Als Hilfsmittel auf natürlicher Basis kommen solche aus Landpflanzen, Meerespflanzen oder aus Mikroorganismen in Betracht, die Polysaccharide, Disaccharide oder Monosaccharide enthalten. Beispielhaft sind hier Stärke und Stärkeprodukte, also physikalisch und chemisch modifizierte Stärke(ester/ether), Galaktomannane, wie z.B. Guargummi und Johannisbrotkernmehl, Pektinstoffe, wie z.B. Apfelpektin, Citruspektin, Exsudat-Gummi, wie z.B. Tranganth, Cellulose-Derivate, wie z.B. Carboxymethylcellulose (CMVC), O-Methylcellulose, Quittensamen, Leinsamenschleim, Kirschgummi, Salepmannan, Lärchengummi, Lichenin aus Isländisch Moos, Tamarillenkernmehl, Konjakumehl, Taragummi und Glucose, Fructose, Saccharose als Hydrokolloid aus Landpflanzen genannt.

Als Hydrokolloid aus Meerespflanzen kommen Alginate, Agar, Carrageenane und Dänischer Agar in Betracht.

Als Hydrokolloid aus Mikroorganismen sind Dextran und Xanthan zu nennen.

Weitere Hydrokolloide auf natürlicher Basis, die Proteine enthalten sind Gelatine und Proteinhydrolysate, vorzugsweise mit einem Molekulargewicht von unter 10.000.

Auch Hydrokolloide auf synthetischer Basis, wie Polyethylenglykol (PEG), Polyvinylpyrrolidon (PVP), Polyvinylacetat (PVAC) sind physiologisch unbedenklich und können, soweit sie lebensmittelrechtlich zugelassen sind, erfindungsgemäß eingesetzt werden.

Als weiteres Hilfsmittel kann auch löslicher Kaffee-Extrakt (löslicher Kaffee), beispielsweise der Arten flüssiger, sprühgetrockneter und gefriergetrockneter löslicher Kaffee eingesetzt werden. Hierbei liegt die Korngröße im allgemeinen bei 0,1 bis 2,5 mm, vorzugsweise 0,1 bis 0,5 mm.

Bevorzugte Hilfsmittel sind Polysaccharide, Hydrokolloide, Pflanzenextrakte, insbesondere Carboxymethylcellulose, Gelatine und Kaffee-Extrakte.

Die Menge an wasserfreiem Hilfsmittel beträgt 0,1 bis 20, vorzugsweise 0,5 bis 4 Gewichtsteile, bezogen auf 100 Gewichtsteile Röstkaffee.

Gegenstand der Erfindung ist ferner ein Verfahren zur Herstellung von aromatisierten Röstkaffeemischungen, bei dem der Röstkaffee in Form ganzer, gebrochener oder gemahlener Bohnen mit angegebener Menge einer aromawirksamen Substanz in Berührung gebracht und der aromatisierte Röstkaffee auf den gewünschten Feuchtigkeitsgehalt eingestellt wird. Das kann gleichzeitig mit der Aromatisierung oder anschließend mit Wasserdampf oder einer wasserhaltigen Flüssigkeit, beispielsweise Wasser, einer wäßrigen Salzlösung oder Gelatinelösung geschehen. Vorzugsweise wird die Aromatisierung mit dem üblichen Auffeuchten des Röstkaffees auf maximal 5 Gew.% Wasser verbunden. Vorzugsweise erfolgt die Aromatisierung durch intensives Vermischen von gemahlenem Röstkaffee mit den aromatisierten Substanzen, wenn diese als Feststoff, d.h. Pulver vorliegen. Flüssige Aromastoffe können - gegebenenfalls in Anwesenheit eines Fixierungsmittels - auf die ganzen Bohnen, den Bohnenbruch oder gemahlenen Kaffee unter gründlicher Durchmischung aufgesprüht werden. Wenn ganze Röstkaffeebohnen oder Bohnenbruch erfindungsgemäß aromatisiert werden, können sie vor dem Abpacken beim Hersteller gemahlen werden, um dadurch zusätzlich eine gleichmäßige Verteilung der aromatisierenden Substanzen zu erhalten oder das Vermahlen kann dem Endverbraucher überlassen bleiben.

Das Mischen mit den aromawirksamen Stoffen wird zweckmäßigerweise in einem Trocken-, Schneckenkonus-, Pflugschar- oder Muldenmischer ausgeführt. Das so behandelte Produkt kann in einem Trockner, wie beispielsweise einem Band-, Fließ- oder Wirbelbetttrockner getrocknet werden. Beispielsweise wird der frisch geröstete Kaffee in Form ganzer Bohnen, Bohnenbruch oder gemahlener Bohnen mit einer Restfeuchte von 0,1 bis 3 Gew.% mit einer wäßrigen Aromalösung bei 25 bis 180 °C bedüst und bis maximal 5 % aufgefeuchtet. Die Temperatur ist abhängig von der Flüchtigkeit der eingesetzten Aromen.

Als weiteres Verfahren können Röstkaffeebruch oder gemahlener Röstkaffee in entsprechenden Mischern vorgelegt werden, denen ein gewisser Anteil an Geschmacksstoffen und/oder Aromen zugesetzt wird. Hierauf wird diese Mischung mit einem Sirup von einem der Hilfsmittel oder Kaffee-Extraktkonzentrat besprüht. Das Zumischen weiterer Geschmacks- und Aromastoffe ist möglich.

Das Aromatisieren kann mittels einer Mehrstoffdüse erfolgen, wobei die aromawirksamen Stoffe mit Dampf, Wasser oder wäßrigen Lösungen obiger Art gemeinsam auf den Röstkaffee gesprüht werden. Der dabei entstehende aromatisierte Röstkaffee fällt sofort in einen Trockner.

Der erfindungsgemäße Röstkaffee wird vorzugsweise gemahlen in Aufgußbeuteln, insbesondere Filterpapieraufgußbeutel verwendet.

Die Erfindung wird im folgenden durch Ausführungsbeispiele näher erläutert. Dort verwendete Prozentzahlen beziehen sich auf Gewichtsprozent.

Für die nachstehenden Beispiele wurde ein mittels einer Prall- oder Kugelmühle feinst gemahlener Röstkaffee mit einer Korngröße von 60 bis 100 μm und einer Restfeuchte von 4 % eingesetzt.

**Beispiel 1**

Auf 94,5 Gew.-Teile des gemahlenen Röstkaffees in einer sich drehenden Mischtrommel wird ein Sprühstab mit einer Zweistoffdüse entlang der Drehpunkt-Achse der Mischtrommel eingeführt. Zunächst wird eine Aromalösung (Sauerkirsch/Wasser) mit einem Anteil von 5 Gew.-Teilen unter einem Druck von 1,5 bar und anschließend Mandelöl (0,5 Gew.-Teile) mit einem Druck von 3,5 bar versprüht. Der Feuchtigkeitsgehalt des aromatisierten Röstkaffees beträgt bis zu 4,8 %.

**Beispiel 2**

In einem Pflugscharmischer werden 45 Gew.-Teile des gemahlenen Röstkaffees, 20 Gew.-Teile Kaffeeweißer, 30 Gew.-Teile Zuckerraffinade, 0,1 Gew.-Teile Salz und 4,9 Gew.-Teile einer Aromalösung über einen Zeitraum von 5 min. gemischt und anschließend abgelassen.

**Beispiel 3**

In einem Pflugscharmischer werden mittels einer Zweistoffdüse Isoglucose auf folgenden Rezepturvorschlag versprüht.

| | |
|---|---|
| Röstkaffee gemahlen | 35,0 % |
| Kaffeeweißer | 40,0 % |
| Zucker Raffinade | 12,0 % |
| Iso-Glucose | 6,0 % |
| Gewürze | 4,0 % |
| Aroma | 3.0 % |
| | 100,0 % |

**Patentansprüche**

1. Röstkaffee, dadurch gekennzeichnet, daß er zusätzlich eine aromawirksame Substanz enthält.

2. Aromatisierter Röstkaffee nach Anspruch 1, dadurch gekennzeichnet, daß der Röstkaffee gemahlen ist.

3. Aromatisierter Röstkaffee nach Anspruch 1 oder 2, dadurch gekennzeichnet, daß er eine Restfeuchte bis zu 5 Gew.% hat.

4. Aromatisierter Röstkaffee nach einem der Ansprüche 1 bis 3, dadurch gekennzeichnet, daß die aromawirksame Substanz ein Süßstoff oder eine natürliche süßschmeckende Verbindung, eine Droge, ein Gewürz, ein Pflanzenextrakt, eine Milchpulverzubereitung, ein Fruchtpulver, Kakaopulver oder ein natürlicher, naturidentischer oder synthetischer Aromastoff ist.

5. Aromatisierter Röstkaffee nach einem der Ansprüche 1 bis 3, dadurch gekennzeichnet, daß der Aromastoff ein etherisches Öl oder eine Riechstoffverbindung ist.

6. Aromatisierter Röstkaffee nach einem der Ansprüche 1 bis 5, dadurch gekennzeichnet, daß ein Gewürz aus der Gruppe von Salz, Zimt, Curry, Basilikum, Vanille, Nelke, Muskat, Kardamon verwendet wird.

7. Aromatisierter Röstkaffee nach den Ansprüchen 1 bis 6, dadurch gekennzeichnet, daß ein Hilfsmittel zur Fixierung der aromawirksamen Substanzen eingesetzt wird.

8. Verfahren zur Herstellung von aromatisiertem Röstkaffee nach einem der Ansprüche 1 bis 7, dadurch gekennzeichnet, daß der Röstkaffee in Form ganzer, gebrochener oder vorzugsweise gemahlener Bohnen mit einer aromawirksamen Substanz in Berührung gebracht und auf die gewünschte Restfeuchte eingestellt wird.

9. Verfahren nach Anspruch 8, dadurch gekennzeichnet, daß der aromatisierte Röstkaffee in Form von ganzen Bohnen oder grobem Bohnenbruch anschließend vermahlen wird.

10. Verfahren nach den Ansprüchen 8 oder 9, dadurch gekennzeichnet, daß der aromatisierte Röstkaffee auf eine Feuchte von 0,1 bis 5 Gew.% eingestellt wird.

11. Verfahren nach einem der Ansprüche 8 bis 10, dadurch gekennzeichnet, daß die Einstellung der Feuchtigkeit mit Wasserdampf oder einer wasserhaltigen Flüssigkeit erfolgt.

12. Verfahren nach einem der Ansprüche 8 bis 11, dadurch gekennzeichnet, daß der gemahlene Röstkaffee mit den Aromen und/oder Geschmacksstoffen in einem Trommel-, Schneckenkonus-, Pflugschar- oder Muldenmischer gemischt wird.

13. Verfahren nach einem der Ansprüche 8 bis 12, dadurch gekennzeichnet, daß eine aromawirksame flüssige Substanz auf den insbesondere gemahlenen Röstkaffee aufgesprüht wird.

14. Aufgußbeutel, enthaltend einen aromatisierten Röstkaffee nach den Ansprüchen 1 bis 7.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-2 017 892 (P. CLARY) <br><br> * Seite 2; Ansprüche 1-3 * <br> --- | 1-4,6, 8-10,13 | A23F5/46 <br> A23F5/14 |
| X | US-A-2 588 922 (E. HANEY) <br> * das ganze Dokument * <br> --- | 1-5,7-10 | |
| X | FR-A-1 100 441 (E. PERRIN ET AL.) <br> * das ganze Dokument * <br> --- | 1-4,8,10 | |
| X | US-A-3 625 703 (J. ERICSON) <br> * das ganze Dokument * <br> --- | 1-4,8,10 | |
| X | GB-A-13 690 (G. RANGELEY) 1909 <br><br> * Seite 2; Ansprüche 1,2 * <br> --- | 1-4,8, 10,14 | |
| X | DE-C-133 543 (J. SCHUTZ ET AL.) <br> * Seite 3; Anspruch * <br> --- | 1-4,8-10 | |
| X | US-A-3 873 746 (J. MAHLMANN) <br> * Spalte 4, Zeile 29 - Zeile 36; Anspruch 1 * <br> --- | 1-5,8,10 | **RECHERCHIERTE SACHGEBIETE (Int.Cl.6)** <br><br> A23F |
| X | US-A-4 640 842 (W. MAY) <br><br> * Spalte 32, Zeile 60 - Spalte 33, Zeile 22; Anspruch 1 * <br> --- | 1-4,7,8, 10 | |
| X | GB-A-1 179 669 (R. FIRMENICH ET AL.) <br> * Seite 2, Zeile 11 - Zeile 24; Anspruch 1 * <br> --- <br><br> -/-- | 1-5,8 | |

Der vorliegende Recherchenbericht wurde für alle Patentansprüche erstellt

| Recherchenort | Abschlußdatum der Recherche | Prüfer |
|---|---|---|
| DEN HAAG | 9.Juni 1995 | Desmedt, G |

Europäisches Patentamt

EUROPÄISCHER RECHERCHENBERICHT

Nummer der Anmeldung

EP 95 10 4430

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DATABASE WPI<br>Week 8743<br>Derwent Publications Ltd., London, GB;<br>AN 87-301346<br>& HU-A-42 924 (CYCLOPACK KUTATASI)<br>* Zusammenfassung *<br>----- | 1-6,8 | |
| | | | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| DEN HAAG | 9.Juni 1995 | Desmedt, G |